# EUROPÄISCHE PATENTSCHRIFT

(11) **EP 3 381 263 B1**
(45) Veröffentlichungstag und Bekanntmachung des Hinweises auf die Patenterteilung: **10.03.2021**
(21) Anmeldenummer: 18153559.2
(22) Anmeldetag: 26.01.2018
(51) Int. Cl.: A01D 41/127, A01D 75/18, B60R 99/00, B60Q 5/00, G10K 11/18

(54) **LANDWIRTSCHAFTLICHES FAHRZEUG**
AGRICULTURAL VEHICLE
VÉHICULE AGRICOLE

(30) Priorität: 24.02.2017 DE 102017103968
(43) Veröffentlichungstag der Anmeldung: 03.10.2018
(73) Patentinhaber: CLAAS Tractor S.A.S., 78141 Vélizy-Villacoublay Cedex (FR)
(72) Erfinder: Raye, Isabelle, 78470 Saint Remy les Chevrevse (FR)
(74) Vertreter: CLAAS Gruppe

(56) Entgegenhaltungen:
- EP-A2- 1 044 596
- EP-B1- 0 065 581
- DE-A1- 19 831 576
- DE-A1-102004 044 513
- DE-A1-102015 111 054
- US-A1- 2002 107 625

## Beschreibung

Die vorliegende Erfindung betrifft ein landwirtschaftliches Fahrzeug gemäß dem Oberbegriff des Anspruches 1 sowie ein Verfahren zum Überwachen eines landwirtschaftlichen Fahrzeugs gemäß dem Oberbegriff des Anspruchs 13.

Die EP 0 065 581 B1 betrifft ein als Mähdrescher ausgeführtes landwirtschaftliches Fahrzeug, welches eine auf einem Fahrzeugrahmen angeordnete Kabine umfasst. Derartige Fahrzeuge verfügen weiterhin über ein Antriebsaggregat, welches im Allgemeinen als ein Verbrennungsmotor ausgeführt ist, sowie zumindest ein trieblich mit dem Fahrzeug verbundenes Arbeitsaggregat. Dabei handelt es sich bei dem Mähdrescher um ein Vorsatzgerät sowie verschiedene, der Bearbeitung von aufgenommenem Erntegut dienenden Vorrichtungen, wie einem Dreschwerk oder einer Abscheidevorrichtung. An ein als Traktor ausgeführtes landwirtschaftliches Fahrzeug werden front- und/oder heckseitig Anbaugeräte angeschlossen, die mittels Zapfwellen angetrieben werden. Um zu verhindern, dass von dem Verbrennungsmotor erzeugte Geräusche durch Luftschall oder Körperschall in das Innere der Kabine übertragen werden, sieht die EP 0 065 581 B1 vor, dass die Kabine mittels eines großflächigen, als Matte ausgeführten Schwingungsisolierelementes, welches Luft- und Körperschall absorbiert, auf dem Fahrzeugrahmen abgestützt wird. Hierzu ist die Matte an den Außenseiten der Kabine zwischen diesen und den Abstützflächen am Fahrzeugrahmen angeordnet, mit dem Ziel einer nahezu hermetischen Isolation gegenüber einem Eindringen von Luft- und Körperschall in die Kabine. Eine solche schalltechnische Isolation erschwert es einer in der Kabine befindlichen Bedienperson Geräusche differenziert wahrzunehmen, welche Rückschlüsse auf den Betriebszustand von Antriebsaggregat oder Arbeitsaggregat zulassen, insbesondere wenn im Inneren der Kabine eine zusätzliche Schallquelle in Form eines Radios oder dergleichen betrieben wird.

Aufgabe der vorliegenden Erfindung ist es, ein landwirtschaftliches Fahrzeug sowie ein Verfahren zum Betreiben eines landwirtschaftlichen Fahrzeugs der eingangs genannten Art bereitzustellen, welches die Nachteile des Standes der Technik vermeidet.

Diese Aufgabe wird erfindungsgemäß durch ein landwirtschaftliches Fahrzeug gemäß den Merkmalen des Anspruches 1 sowie ein Verfahren gemäß den Merkmalen des unabhängigen Anspruches 13 gelöst.

Vorteilhafte Weiterbildungen sind Gegenstand der Unteransprüche.

Gemäß dem Anspruch 1 wird ein landwirtschaftliches Fahrzeug, insbesondere Traktor oder selbstfahrende Erntemaschine, vorgeschlagen, welches eine an einem Fahrzeugrahmen angeordnete Fahrerkabine, sowie ein Antriebsaggregat umfasst. Zur Flexibilisierung der Geräuschdämpfung im Inneren der Fahrerkabine des landwirtschaftlichen Fahrzeugs ist vorgesehen, dass das landwirtschaftliche Fahrzeug mindestens einen Aktor zur Erzeugung und Einkopplung von Schwingungen in zumindest ein Karosseriebauteil aufweist, wobei der mindestens eine Aktor in Abhängigkeit mindestens eines Schwingungen repräsentierenden Wertes steuerbar oder regelbar ist, welcher zumindest an dem Antriebsaggregat erfasst wird. Ein derartiges Fahrzeug ermöglicht eine selektive Einkopplung von Geräuschen respektive Schwingungen zu ihrer differenzierten akustischen Wahrnehmung durch eine Bedienperson. Zur aktiven Einkopplung der Schwingungen in den Innenraum der Fahrerkabine werden von dem Antriebsaggregat erzeugte Schwingungen, insbesondere Oberschwingungen, die auch als harmonische Schwingungen zweiter und höherer Ordnung bezeichnet werden, bestimmt, die mittels des mindestens einen Aktors erzeugt und in das Karosseriebauteil eingekoppelt werden. Bei den zu bestimmenden Schwingungen handelt es sich um Schwingungen des Antriebsaggregates, die in Form von Körperschall von den Karosserieteilen des Fahrzeugs übertragen werden. Das Einkoppeln der Schwingungen in die Fahrerkabine hat den Vorteil, dass gezielt insbesondere nur die Geräusche des Antriebsaggregates der Arbeitsmaschine in die Fahrerkabine eingeleitet werden, welche der Bedienperson Rückschlüsse auf den Betriebszustand des Antriebsaggregates ermöglichen. Insbesondere lässt sich die Erzeugung der einzukoppelnden Schwingungen an die unterschiedlichen Betriebscharakteristika eines Antriebsaggregates anpassen. Die verschiedenen Betriebscharakteristika eines Antriebsaggregates können sich daraus ergeben, dass es sich um unterschiedliche Motorentypen handelt als auch durch das Auftreten unterschiedlicher Belastungssituationen des Antriebsaggregates. Dadurch kann eine Bedienperson des Fahrzeugs früher auf Veränderungen bei den nicht gedämpften Geräuschen reagieren, die einen Hinweis auf eine von einem normalen Betriebsverhalten abweichende Funktionsweise geben können. Hierdurch kann auch eine Ermüdung des Bedieners während der Arbeit verringert und dessen Aufmerksamkeit gesteigert werden.

Hierzu kann vorzugsweise an dem landwirtschaftlichen Fahrzeug zumindest ein Sensor angeordnet sein, der der Detektion von Schwingungen des Antriebsaggregates dient. Dabei kann es sich um zumindest einen berührenden oder einen nicht berührenden Sensor handeln. Der zumindest eine Sensor kann als aktiver oder passiver Sensor ausgebildet sein.

Zudem kann an zumindest einem trieblich mit dem Fahrzeug verbundenen Arbeitsaggregat zumindest ein Sensor angeordnet sein, der der Detektion von Schwingungen dient. Bei dem zumindest einen trieblich verbundenen Arbeitsaggregat kann es sich um in dem landwirtschaftlichen Fahrzeug befindliche Vorrichtungen zur Bearbeitung von Erntegut handeln als auch um an diesem anbringbare Vorsatz- oder Anbaugeräte. Auch diese Arbeitsaggregate oder Teile von diesen können Oberschwingungen erzeugen, die mittels eines Sensors erfasst werden können. Die mittels des Sensors erfassten Oberschwingungen können gleichfalls zur Regelung des mindestens einen Aktors herangezogen werden. Auf diese Weise kann gezielt die Schallemission zumindest eines der Arbeitsaggregate in die Fahrerkabine eingeleitet werden. Dadurch wird dem Fahrer die Möglichkeit geboten, für den ordnungsgemäßen Betrieb des Arbeitsaggregates spezifische Geräusche des von dem an dem Fahrzeug angeordneten Arbeitsaggregat besser wahrzunehmen, um schneller auf Abweichungen hiervon reagieren zu können.

Dabei kann der zumindest eine Sensor zur Bestimmung von Bewegungsgrößen, Geschwindigkeit oder Beschleunigung, ausgebildet sein. Insbesondere ist der zumindest eine Sensor als Beschleunigungssensor ausgeführt, der im Bereich des im Allgemeinen eingehausten Antriebsaggregates angeordnet ist. Mit dem zumindest einen Beschleunigungssensor können die Oberschwingungen des Antriebsaggregates bestimmt werden. Die Amplituden der Oberschwingungen sind proportional zu der jeweiligen Belastung des Antriebsaggeragtes beziehungsweise Arbeitsaggregates. Somit kann das Regelungsverhalten des mindestens einen Aktors lastabhängig verändert werden.

Weiterhin kann das Fahrzeug eine Steuerungsvorrichtung umfassen, welche zur Auswertung der von dem zumindest einen Beschleunigungssensor bereitgestellten Signale eingerichtet ist. Mittels der Steuereinrichtung kann der mindestens eine Aktor angesteuert werden.

Insbesondere kann die Steuerungsvorrichtung zumindest einen Frequenzfilter umfassen. Dabei kann vorzugsweise eine Kombination aus einem Tiefpass- und einem Hochpassfilter vorgesehen sein, welche durch die Steuerungsvorrichtung individuell ansteuerbar sind. Der zumindest eine Frequenzfilter kann als aktiver oder passiver Frequenzfilter ausgeführt sein.

Bevorzugt kann die Steuerungsvorrichtung einen Verstärker umfassen. Mittels des Verstärkers lassen sich die Filtereigenschaften des zumindest einen Frequenzfilters verbessern. Dies kommt insbesondere bei aktiven Frequenzfiltern im Niederfrequenzbereich zum Tragen. Weiterhin kann ein Signalwandler vorgesehen sein, welcher die analogen Signale des zumindest einen Frequenzfilters in digitale Signale umwandelt. Dadurch lassen sich die Signale des zumindest einen Frequenzfilters durch die Steuerungsvorrichtung einfacher verarbeiten.

Vorteilhaft ist es, wenn ein Einstellmittel vorgesehen ist, welches der Anpassung der Amplitude dient, mit welcher der mindestens eine Aktor angesteuert wird. Vorzugsweise kann das Einstellmittel als ein Potentiometer ausgeführt sein.

Vorteilhaft ist es, wenn die Steuerungsvorrichtung zur Einstellung eines Schwingungsfrequenzbereichs eingerichtet ist, welcher von dem mindestens einen Aktor in das Karosseriebauteil eingekoppelt wird. Somit kann von der Bedienperson gezielt eine harmonische Schwingung, beispielsweise zweiter oder dritter Ordnung, gezielt ausgewählt werden, die durch eine entsprechende Ansteuerung des mindestens einen Aktors in die Fahrerkabine eingeleitet werden soll. Mittels der Steuerungsvorrichtung kann ausgewählt werden, ob eine Überwachung des Antriebsaggregates oder wahlweise eines Arbeitsaggregates durchgeführt werden soll.

Gemäß einer bevorzugten Weiterbildung kann die Steuerungseinrichtung zur Auswahl von betriebszustandsabhängigen Grundeinstellungen zur Steuerung oder Regelung des mindestens einen Aktors eingerichtet sein. Als Betriebszustände kommen grundsätzlich die Straßenfahrt und die Feldfahrt in Betracht. Bei der Straßenfahrt sind die Arbeitsaggregate, sofern sie mitgeführt werden, inaktiv, so dass nur das Antriebsaggregat ursächlich für Schallemissionen ist, die in die Fahrerkabine des Fahrzeugs übertragen werden.

Insbesondere kann das Karosseriebauteil, in welches Schwingungen eingekoppelt werden, Teil einer Fahrerkabine des landwirtschaftlichen Fahrzeugs sein.

Hierzu kann der mindestens eine Aktor Schwingungen in ein flächiges Bauteil der Fahrerkabine einkoppeln. Dabei handelt es sich bevorzugt um eine Scheibe der Fahrerkabine. Besonders bevorzugt handelt es sich um die Frontscheibe der Fahrerkabine. Dies hat den Vorteil, dass die große Fläche der Frontscheibe für eine gleichmäßige und nicht ortbare Schallabstrahlung genutzt werden kann.

Vorzugsweise kann der mindestens eine Aktor im Boden der Fahrerkabine angeordnet sein. Der Boden wirkt dabei als Resonanzkörper für den den Schall erzeugenden Aktor.

Weiterhin wird die Aufgabe durch ein Verfahren zum Überwachen eines landwirtschaftlichen Fahrzeugs, insbesondere Traktor oder selbstfahrende Erntemaschine, gelöst, das eine an einem Fahrzeugrahmen angeordnete Fahrerkabine sowie ein Antriebsaggregat umfasst. Hierzu weist das landwirtschaftliche Fahrzeug mindestens einen Aktor auf, von dem Schwingungen erzeugt und in zumindest ein Karosseriebauteil eingekoppelt werden, wobei der Aktor in Abhängigkeit mindestens eines Beschleunigungswertes gesteuert oder geregelt wird, welcher zumindest an dem Antriebsaggregat erfasst wird. Der Bedienperson können im Inneren der Fahrerkabine gezielt charakteristische Schwingungen des Antriebsaggregates bereitgestellt werden, welche für proportional zur Last des Arbeitsaggregates sind. Auftretende Abweichungen im Betriebsverhalten können von der Bedienperson akustisch wahrgenommen werden.

Im Unterschied zum eingangs genannten Stand der Technik, welcher eine weitgehend schalltechnische Isolation der Fahrerkabine vorsieht, werden erfindungsgemäß gezielt ausgewählte Frequenzen oder Frequenzbereiche in die Fahrerkabine eingekoppelt, welche der Bedienperson eine akustische Überwachung des Antriebsaggregates oder eines Arbeitsaggregates ermöglichen.

Hierzu kann von zumindest einem an dem landwirtschaftlichen Fahrzeug angeordneten Sensor Schwingungen des Antriebsaggregates detektiert werden.

Zudem kann an zumindest einem trieblich mit dem Fahrzeug verbundenen Arbeitsaggregat zumindest ein Sensor angeordnet sein, der der Detektion von Schwingungen dient.

Die vorliegende Erfindung wird nachstehend anhand von in den Zeichnungen dargestellten Ausführungsbeispielen näher erläutert.

Es zeigen:
- Fig. 1: eine schematische Ansicht eines als Traktor ausgeführten landwirtschaft-lichen Fahrzeugs;
- Fig. 2: eine schematische Ansicht eines als Mähdrescher ausgeführten land-wirtschaftlichen Fahrzeugs;
- Fig. 3: eine schematisierte Darstellung eines Bedien- und Steuersystems für ein landwirtschaftliches Fahrzeug;

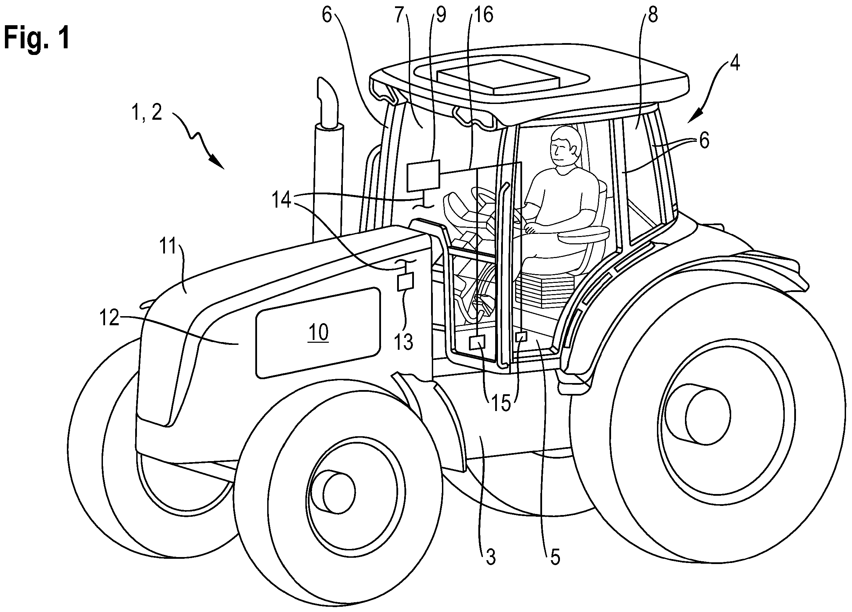

In Fig. 1 ist ein landwirtschaftliches Fahrzeug 1 in Form eines Traktors 2 schematisch in perspektivischer Ansicht dargestellt, wobei der grundsätzliche Aufbau eines solchen Traktors als dem Fachmann bekannt angesehen wird. Ein landwirtschaftliches Fahrzeug 1 im Sinne der Erfindung kann jedes zur landwirtschaftlichen Arbeit einsetzbare Fahrzeug sein, beispielsweise ein Traktor, ein Frontlader, eine Baumaschine, oder eine selbstfahrende Erntemaschine wie ein Mähdrescher oder Feldhäcksler.

Der Traktor 2 weist umfasst eine Vielzahl von Karosserieteilen, welche an einem Fahrzeugrahmen 3 angerordnet sind. Zur Aufnahme eines Bedieners ist eine geschlossene Fahrerkabine 4 vorgesehen. Die Fahrerkabine 4 ist auf dem Fahrzeugrahmen 3 des Traktors 2 angeordnet. Die Fahrerkabine 4 umfasst einen Kabinenboden 5, mit welchem sie an dem Fahrzeugrahmen 3 angeordnet ist. Weiterhin umfasst die Fahrerkabine 4 einen Kabinenrahmen 6, an welchem eine Frontscheibe 7 sowie Seitenscheiben 8 angebracht sind. Innerhalb der Fahrerkabine 4 ist üblicherweise eine als Bedien- und Steuersystem 9 ausgeführte Steuerungsvorrichtung zur Bedienung und Steuerung des landwirtschaftlichen Fahrzeugs 1 respektive des Traktors 2 angeordnet. Das Bedien- und Steuersystem 9 umfasst Eingabe- und Ausgabemittel 45 zur Interaktion des Bedieners mit diesem. Zum Antrieb und zur Bereitstellung der zum Betrieb des Traktors 2 benötigten Energie, weist der Traktor 2 ein Antriebsaggregat 10 in Form eines Verbrennungsmotors auf. Das Antriebsaggregat 10 ist unter einer in einer geschlossenen Position dargestellten Abdeckhaube 11 angeordnet. Die Abdeckhaube 11 bildet, zumindest teilweise, mit weiteren Karosseriebauteilen des Traktors 2 einen Motorraum 12 im Wesentlichen um das Antriebsaggregat 10 herum aus.

In dem das Antriebsaggregat 10 umgebenden Motorraum 12 ist zumindest ein Beschleunigungssensor 13 angeordnet, welcher der Messung der Beschleunigung zur Bestimmung des Schwingungsverhaltens des im Betrieb befindlichen Antriebsaggregates 10 dient. Die von dem Beschleunigungssensor 13 erzeugten Signale, die einen Beschleunigungswert repräsentieren, werden von dem Bedien- und Steuersystem 9 empfangen und ausgewertet. Hierzu ist der zumindest eine Beschleunigungssensor 13 durch eine Signalleitung 14 mit dem Bedien-und Steuersystem 9 verbunden. Alternativ kann eine zusätzliche Steuereinheit an dem landwirtschaftlichen Fahrzeug vorgesehen sein, die dem Empfang und der Auswertung der einen Beschleunigungswert repräsentierenden Signale dient.

An der Frontscheibe 7 ist, vorzugsweise im Bereich des Bodens 6 der Fahrerkabine 4, wenigstens ein Aktor 15 angeordnet. Ein weiterer Aktor 15 ist in den Kabinenboden 5 eingelassen. Es kann beispielsweise auch nur ein Aktor 15 an der Frontscheibe 7 beziehungsweise in dem Kabinenboden 5 angeordnet sein. Der Aktor 15 ist zur Erzeugung von niederfrequenten Schwingungen eingerichtet. Mit dem Bedien- und Steuersystem 9 sind die Aktoren 15 durch eine weitere Signalleitung 16 verbunden.

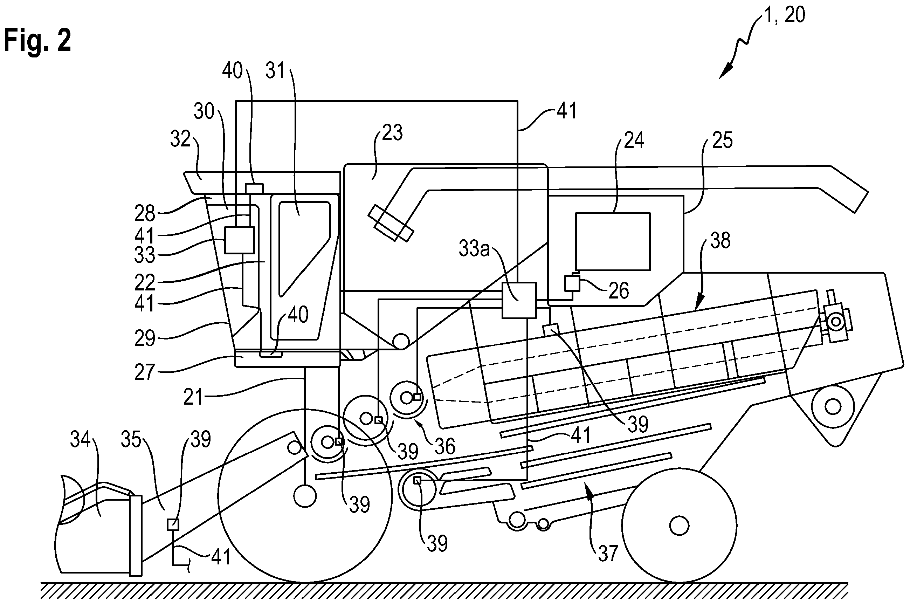

In der Fig. 2 ist mit 20 ein selbstfahrender Mähdrescher bezeichnet, der eine an einem Fahrzeugrahmen 21 angeordnete Fahrerkabine 22, einen hinter dieser liegenden Korntank 23 sowie sich anschließend an diesen ein als Verbrennungsmotor ausgeführtes Antriebsaggregat 24 aufweist, der von einem Motorgehäuse 25 abschnittsweise umgeben ist. In dem das Antriebsaggregat 24 umgebenden Raum ist ein Beschleunigungssensor 26 angeordnet, welcher der Messung der Beschleunigung zur Bestimmung des Schwingungsverhaltens des im Betrieb befindlichen Antriebsaggregates 24 dient.

Die Fahrerkabine 22 umfasst einen Boden 27, mit welchem die Fahrerkabine 22 an dem Fahrzeugrahmen 21 des Mähdreschers 20 angeordnet ist. Weiterhin umfasst die Fahrerkabine 22 einen Kabinenrahmen 28, an welchem eine Frontscheibe 29 sowie Seitenscheiben 30 und eine Kabinentür 31 angebracht sind. Die Fahrerkabine 22 wird nach oben durch ein Kabinendach 32 begrenzt. Innerhalb der Fahrerkabine 22 ist ein Bedien- und Steuersystem 33 zur Bedienung und Steuerung des landwirtschaftlichen Fahrzeugs 1 respektive des Mähdreschers 20 angeordnet. Weiterhin weist der Mähdrescher 20 eine zusätzliche Steuereinheit 33a auf. Die Steuereinheit 33a ist signaltechnisch mit den Beschleunigungssensoren 26 und 39 verbunden. Die Steuereinheit 33a empfängt Signale, die Beschleunigungswerte repräsentieren, und wertet diese aus. Im Anschluss an deren Auswertung werden diese Signale an das Bedien- und Steuersystem 33 weitergeleitet. Selbstverständlich kann das Empfangen und Auswerten der Signale der Beschleunigungssensoren 26 und 39 auch unmittelbar durch die Bedien- und Steuersystem 33 erfolgen.

Des Weiteren umfasst der Mähdrescher 20 ein als Vorsatzgerät 34 ausgeführtes Arbeitsaggregat, welches an einem Schrägförderer 35 des Mähdreschers 20 angeordnet ist. Dem Schrägförderer 35 nachgeordnet ist ein als Dreschwerk 36 ausgeführtes Arbeitsaggregat angeordnet, welches dem Bearbeiten von Erntegut dient, welches mit dem Vorsatzgerät 34 aufgenommen und dem Dreschwerk 36 durch den Schrägförderer 35 zugeführt wird. Von dem Dreschwerk 36 verarbeitetes, im Wesentlichen aus Kornbestandteilen bestehendes Erntegut gelangt auf einen Förderboden und von diesem zu einer Reinigungsvorrichtung 37. Ein im Wesentlichen aus Nichtkornbestandteilen bestehender Erntegutstrom wird von dem Dreschwerk 36 an eine Abscheidevorrichtung 38 weitergeleitet, welche in dem Erntegutstrom befindliche Kornbestandteile ausscheidet und an die Reinigungsvorrichtung 37 abgibt. Sowohl bei der Reinigungsvorrichtung 37 als auch bei der Abscheidevorrichtung 38 handelt es sich um Arbeitsaggregate des Mähdreschers 20, welche, wie auch das Vorsatzgerät 34 und der Schrägförderer 35, von dem Verbrennungsmotor 24 angetrieben werden. Einem oder mehreren dieser Arbeitsaggregate kann ebenfalls ein Beschleunigungssensor 39 zugeordnet sein. So ist ein Beschleunigungssensor 39 dem Reinigungsgebläse der Reinigungsvorrichtung 37 zugeordnet.

In der Fahrerkabine 22 des Mähdreschers 20 befinden sich im Boden 27 sowie im Kabinendach 32 Aktoren 40, welche zur Erzeugung von niederfrequenten Schwingungen eingerichtet sind. Die Aktoren 40 sind durch Signalleitungen 41 mit dem Bedien- und Steuersystem 33 verbunden.

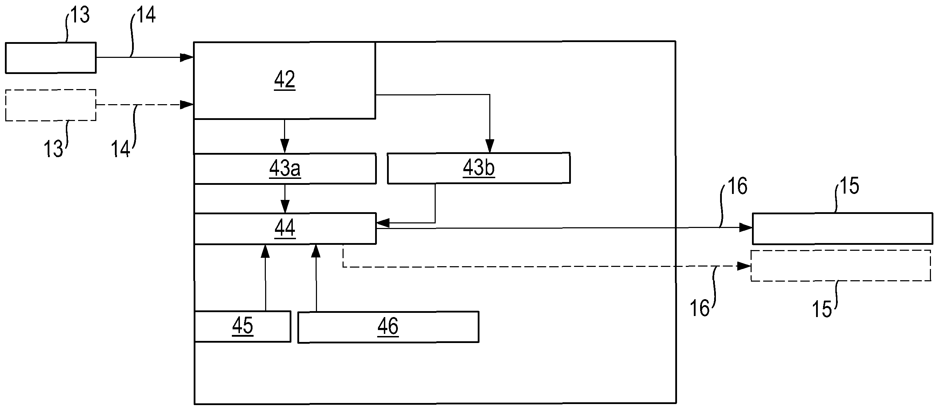

In Fig. 3 ist schematisch die als Bedien- und Steuersystem 9 ausgeführte Steuerungsvorrichtung des Traktors 2 dargestellt. Die Steuerungsvorrichtung kann als offener oder geschlossener Regelkreis ausgeführt sein. Der Aufbau und die Funktionsweise des Bedien- und Steuersystems 33 für den Mähdrescher 20 sind identisch mit derjenigen des Bedien- und Steuersystems 9, so dass auf eine zusätzliche Erläuterung verzichtet wird. Das Bedien- und Steuersystem 9 ist mit zumindest einem Beschleunigungssensor 13 verbunden und empfängt die Signale, die die Beschleunigung des Antriebsaggregates 10 repräsentieren. Strichliniert ist ein weiterer Beschleunigungssensor 13 angedeutet, welcher ebenfalls an das Bedien- und Steuersystem 9 des Traktors 2 angeschlossen ist. Der weitere Beschleunigungssensor 13 kann einem an dem Traktor 2 anbringbaren Arbeitsaggregat (nicht dargestellt) angeordnet sein. Ein Signalumformer 42 wandelt die von dem zumindest einen Beschleunigungssensor 13 empfangenen analogen Signale in digitale Signale um. Die von dem Signalumformer 42 umgewandelten Signale werden von dem Bedien- und Steuersystem 9 empfangen und ausgewertet. Zudem dient der Signalumformer 42 als Stromversorgung des zumindest einen Beschleunigungssensors 13.

Die Signale werden einem oder mehreren Frequenzfiltern 43a, 43b zugeführt. Der Frequenzfilter 43a ist als Tiefpassfilter und der Frequenzfilter 43b als Hochpassfilter ausgeführt. Durch eine rückwirkungsfreie Kombination der beiden Frequenzfilter 43a und 43b lässt sich ein Bandpassfilter 43 darstellen. Die von dem Bandpassfilter 43 innerhalb eines Frequenzbereichs durchgelassenen Signale werden einem Verstärker 44 zugeführt. Der Verstärker 44 überträgt die verstärkten Signale an den wenigstens einen Aktor 15, der vorzugsweise in die Frontscheibe 7 des Traktors 2 integriert ist. Die Eingabe- und Ausgabemittel 45 dienen der Bedienung des Bedien- und Steuersystems 9. Weiterhin kann ein zusätzliches, insbesondere separates, Einstellmittel 46 vorgesehen sein, welches der Ansteuerung des Verstärkers 44 dient. Bei dem Einstellmittel 46 kann es sich beispielsweise ein Potentiometer oder ein sonstiges zur Ansteuerung des Verstärkers 44 geeignetes Bauteil handeln.

Durch den zumindest einen in dem Motorraum 12 angeordneten Beschleunigungssensor 13 werden die Schwingungen des Antriebsaggregates 10 erfasst. Die Amplituden der Oberschwingungen insbesondere erster und zweiter Ordnung, das heißt der harmonischen Schwingungen zweiter und dritter Ordnung, sind proportional zur Last des Antriebsaggregates 10. Von der Bedienperson wird mittels der Eingabe- und Ausgabemittel 45 die Ordnung der harmonischen Schwingung ausgewählt, welche den Bandpassfilter 43 passieren darf. Durch das Einstellmittel 46 ist es der Bedienperson möglich, die Verstärkung der ausgewählten harmonischen Schwingung durch den Verstärker 44 anzupassen. Dadurch kann die Bedienperson die Lautstärke der durch den wenigstens einen Aktor 15 in die Fahrerkabine 4 eingespeisten Schwingungen des Antriebsaggregates 10 an unterschiedliche Betriebszustände des Traktors 2 anpassen. So ist die Last des Antriebsaggregates 10 des Traktors 2 bei einer Straßenfahrt eine andere als bei Arbeiten auf dem Feld, wenn zusätzlich ein Arbeitsaggregat angetrieben wird. Die Bedienperson wählt die Ordnung der Oberschwingung sowie die Lautstärke, mit der diese in die Fahrerkabine 4 eingespeist wird, entsprechend aus, um das Antriebsaggregat 10 gezielt akustisch überwachen zu können.

In entsprechender Weise kann die Bedienperson auch eine akustische Überwachung eines oder mehrerer Arbeitsaggregate durchführen. Hierzu kann durch die Eingabe-Ausgabe-Mittel 45 des Bedien- und Steuersystems 9 gezielt eine Auswahl eines Arbeitsaggregates erfolgen. Entsprechend der Auswahl des Arbeitsaggregates werden von dem weiteren Beschleunigungssensor 13 Signale von dem Bedien- und Steuersystem 9 empfangen und ausgewertet. Im Fall des Traktors 2 handelt es sich um ein trieblich mit diesem verbundenes Anbaugerät oder dergleichen. Im Fall des Mähdreschers 20 kämen neben dem Vorsatzgerät 34 zumindest einzelne im Inneren des Mähdreschers 20 befindliche Arbeitsaggregate in Betracht, wie das Dreschwerk 36, die Reinigungsvorrichtung 37 oder die Abscheidevorrichtung 38 beziehungsweise einzelne Komponenten dieser Arbeitsaggregate, soweit sie für diese Art der akustischen Überwachung zugänglich sind.

Die Anordnung des Aktors 15 in der Frontscheibe 7 des Traktors 2 ist vorteilhaft, da eine große Fläche zur Verfügung steht, die für eine gleichmäßige nicht ortbare Schallabstrahlung genutzt werden kann. Die Anordnung im Boden 5 der Fahrerkabine 4 ist insofern vorteilhaft, als dass dieser als Resonanzkörper des Aktors 15 dient.

Bei dem als Mähdrescher 20 ausgeführten landwirtschaftlichen Fahrzeug ist die Anordnung des zumindest einen Aktors 40 an der Frontscheibe 29 im Bereich des Bodens 27 ebenfalls möglich. Günstiger ist die Anordnung des zumindest einen Aktors 40 an der Frontscheibe 29 im Bereich unterhalb des Kabinendachs 32, da dadurch die Einsehbarkeit auf das Vorsatzgerät 34 keine Einschränkung erfährt. Darüber hinaus ist die Anordnung des zumindest einen Aktors 40 im Boden 27 sowie im Kabinendach 32 denkbar.

**Bezugszeichenliste**

| | | | |
|---|---|---|---|
| 1 | Landwirtschaftliches Fahrzeug | 33 | Bedien- und Steuersystem |
| 2 | Traktor | 33a | Steuereinheit |
| 3 | Fahrzeugrahmen | 34 | Vorsatzgerät |
| 4 | Fahrerkabine | 35 | Schrägförderer |
| 5 | Kabinenboden | 36 | Dreschwerk |
| 6 | Kabinenrahmen | 37 | Reinigungsvorrichtung |
| 7 | Frontscheibe | 38 | Abscheidevorrichtung |
| 8 | Seitenscheibe | 39 | Beschleunigungssensor |
| 9 | Bedien- und Steuersystem | 40 | Aktor |
| 10 | Antriebsaggregat | 41 | Signalleitung |
| 11 | Abdeckhaube | 42 | Signalumformer |
| 12 | Motorraum | 43 | Bandpassfilter |
| 13 | Beschleunigungssensor | 43a | Frequenzfilter |
| 14 | Signalleitung | 43b | Frequenzfilter |
| 15 | Aktor | 44 | Verstärker |
| 16 | Signalleitung | 45 | Eingabe-Ausgabemittel |
| | | 46 | Einstellmittel |
| 20 | Mähdrescher | | |
| 21 | Fahrzeugrahmen | | |
| 22 | Fahrerkabine | | |
| 23 | Korntank | | |
| 24 | Antriebsaggregat | | |
| 25 | Motorgehäuse | | |
| 26 | Beschleunigungssensor | | |
| 27 | Boden | | |
| 28 | Kabinenrahmen | | |
| 29 | Frontscheibe | | |
| 30 | Seitenscheibe | | |
| 31 | Kabinentür | | |
| 32 | Kabinendach | | |

## Patentansprüche

1. Landwirtschaftliches Fahrzeug (1), insbesondere Traktor (2) oder selbstfahrende Erntemaschine (20), umfassend eine an einem Fahrzeugrahmen (3, 21) angeordnete Fahrerkabine (4, 22) sowie ein Antriebsaggregat (10, 24), **dadurch gekennzeichnet, dass** das landwirtschaftliche Fahrzeug (1) mindestens einen Aktor (15, 40) zur Erzeugung und Einkopplung von Schwingungen in zumindest ein Karosseriebauteil (7, 29) aufweist, wobei der Aktor (15, 40) in Abhängigkeit mindestens eines Beschleunigungswertes steuerbar oder regelbar ist, welcher zumindest an dem Antriebsaggregat (10, 24) erfasst wird.

2. Landwirtschaftliches Fahrzeug (1) nach Anspruch 1, **dadurch gekennzeichnet, dass** an dem landwirtschaftlichen Fahrzeug (1) zumindest ein Sensor (13, 26) angeordnet ist, der der Detektion von Schwingungen des Antriebsaggregates (10. 24) dient.

3. Landwirtschaftliches Fahrzeug (1) nach einem der vorangehenden Ansprüche, **dadurch gekennzeichnet, dass** an zumindest einem trieblich mit dem Fahrzeug verbundenen Arbeitsaggregat (34, 35, 36, 37, 38) zumindest ein Sensor (39) angeordnet ist, der der Detektion von Schwingungen dient.

4. Landwirtschaftliches Fahrzeug (1) nach einem der Ansprüche 2 oder 3, **dadurch gekennzeichnet, dass** der zumindest eine Sensor (13, 26, 39) zur Erfassung von Bewegungsgrößen, Geschwindigkeit oder Beschleunigung, ausgebildet ist.

5. Landwirtschaftliches Fahrzeug (1) nach einem der Ansprüche 2- 4, **dadurch gekennzeichnet, dass** das Fahrzeug (1) eine Steuerungsvorrichtung (9, 33) umfasst, welche zur Auswertung der von dem zumindest einen Sensor (13, 26, 39) bereitgestellten Signale eingerichtet ist.

6. Landwirtschaftliches Fahrzeug (1) nach Anspruch 5, **dadurch gekennzeichnet, dass** die Steuerungsvorrichtung (9, 33) zumindest einen Frequenzfilter (43a, 43b) umfasst.

7. Landwirtschaftliches Fahrzeug (1) nach Ansprüche 5 oder 6 **dadurch gekennzeichnet, dass** die Steuerungsvorrichtung (9, 33) einen Verstärker (44) umfasst.

8. Landwirtschaftliches Fahrzeug (1) nach einem der Ansprüche 5 bis 7, **dadurch gekennzeichnet, dass** die Steuerungsvorrichtung (9, 33) zur Einstellung eines Schwingungsfrequenzbereichs eingerichtet ist, welcher von dem mindestens einen Aktor (15, 40) in das zumindest eine Karosseriebauteil (7, 29) eingekoppelt wird.

9. Landwirtschaftliches Fahrzeug (1) nach einem der Ansprüche 5-8, **dadurch gekennzeichnet, dass** die Steuerungseinrichtung (9, 33) zur Auswahl von betriebszustandsabhängigen Grundeinstellungen zur Steuerung oder Regelung des mindestens einen Aktors (15, 40) eingerichtet ist.

10. Landwirtschaftliches Fahrzeug (1) nach einem der vorangehenden Ansprüche, **dadurch gekennzeichnet, dass** das zumindest ein Karosseriebauteil (7, 29) Teil der Fahrerkabine (4, 22) des landwirtschaftlichen Fahrzeugs ist.

11. Landwirtschaftliches Fahrzeug (1) nach einem der vorangehenden Ansprüche, **dadurch gekennzeichnet, dass** der mindestens eine Aktor (15, 40) Schwingungen in ein flächiges Bauteil (7, 29) der Fahrerkabine (4, 22) einkoppelt.

12. Landwirtschaftliches Fahrzeug (1) nach einem der vorangehenden Ansprüche, **dadurch gekennzeichnet, dass** der mindestens eine Aktor (15, 40) im Boden (5, 27) der Fahrerkabine (4, 22) angeordnet ist.

13. Verfahren zum Überwachen eines landwirtschaftlichen Fahrzeugs (1), insbesondere Traktor (2) oder selbstfahrende Erntemaschine (20), umfassend eine an einem Fahrzeugrahmen (3, 21) angeordnete Fahrerkabine (4, 22) sowie ein Antriebsaggregat (10, 24), **dadurch gekennzeichnet, dass** das landwirtschaftliche Fahrzeug (1) mindestens einen Aktor (15, 40) aufweist, von dem Schwingungen erzeugt und in zumindest ein Karosseriebauteil (7, 29) eingekoppelt werden, wobei der Aktor (15, 40) in Abhängigkeit mindestens eines Beschleunigungswertes gesteuert oder geregelt wird, welcher zumindest an dem Antriebsaggregat (10, 24) erfasst wird.

## Claims

1. An agricultural vehicle (1), in particular a tractor (2) or self-propelled harvesting machine (20), comprising a driver's cabin (4, 22) disposed on a vehicle chassis (3, 21) as well as a drive assembly (10, 24), **characterized in that** the agricultural vehicle (1) has at least one actuator (15, 40) for the production of oscillations and for coupling the oscillations into at least one bodywork component (7, 29), wherein the actuator (15, 40) can be managed or controlled as a function of at least one acceleration value which is detected in at least the drive assembly (10, 24).

2. The agricultural vehicle (1) according to claim 1, **characterized in that** at least one sensor (13, 26) is disposed on the agricultural vehicle (1) and acts to detect oscillations of the drive assembly (10, 24).

3. The agricultural vehicle (1) according to one of the preceding claims, **characterized in that** at least one sensor (39) which acts to detect oscillations is disposed on at least one working assembly (34, 35, 36, 37, 38) which is tractively linked to the vehicle.

4. The agricultural vehicle (1) according to one of claims 2 or 3, **characterized in that** the at least one sensor (13, 26, 39) is configured to detect linear momentum, speed or acceleration.

5. The agricultural vehicle (1) according to one of claims 2 to 4, **characterized in that** the vehicle (1) comprises a control device (9, 33) which is configured to analyse the signals provided by the at least one sensor (13, 26, 39).

6. The agricultural vehicle (1) according to claim 5, **characterized in that** the control device (9, 33) comprises at least one frequency filter (43a, 43b).

7. The agricultural vehicle (1) according to claim 5 or claim 6, **characterized in that** the control device (9, 33) comprises an amplifier (44).

8. The agricultural vehicle (1) according to one of claims 5 to 7, **characterized in that** the control device (9, 33) is configured to set a range of oscillation frequencies which is coupled into the at least one bodywork component (7, 29) by the at least one actuator (15, 40).

9. The agricultural vehicle (1) according to one of claims 5 to 8, **characterized in that** the control device (9, 33) is configured to select basic settings for the management or control of the at least one actuator (15, 40) which are dependent on the operating conditions.

10. The agricultural vehicle (1) according to one of the preceding claims, **characterized in that** the at least one bodywork component (7, 29) is a part of the driver's cabin (4, 22) of the agricultural vehicle.

11. The agricultural vehicle (1) according to one of the preceding claims, **characterized in that** the at least one actuator (15, 40) couples oscillations into a planar component (7, 29) of the driver's cabin (4, 22).

12. The agricultural vehicle (1) according to one the preceding claims, **characterized in that** the at least one actuator (15, 40) is disposed in the floor (5, 27) of the driver's cabin (4, 22).

13. A method for monitoring an agricultural vehicle (1), in particular a tractor (2) or self-propelled harvesting machine (20), comprising a driver's cabin (4, 22) disposed on a vehicle chassis (3, 21) as well as a drive assembly (10, 24), **characterized in that** the agricultural vehicle (1) has at least one actuator (15, 40) which produces oscillations and which oscillations are coupled into at least one bodywork component (7, 29), wherein the actuator (15, 40) is managed or controlled as a function of at least one acceleration value which is detected in at least the drive assembly (10, 24).

## Revendications

1. Véhicule agricole (1), en particulier tracteur (2) ou machine de récolte automotrice (20), incluant une cabine de conduite (4, 22) disposée sur un bâti de véhicule (3, 21) ainsi qu'un organe d'entraînement (10, 24), **caractérisé en ce que** le véhicule agricole (1) comporte au moins un actionneur (15, 40) pour générer et coupler des oscillations dans au moins un élément de carrosserie (7, 29), l'actionneur (15, 40) étant commandable ou régulable en fonction d'au moins une valeur d'accélération, laquelle est détectée au moins au niveau de l'organe d'entraînement (10, 24).

2. Véhicule agricole (1) selon la revendication 1, **caractérisé en ce que** sur le véhicule agricole (1) est disposé au moins un capteur (13, 26) qui sert à la détection des oscillations de l'organe d'entraînement (10, 24).

3. Véhicule agricole (1) selon une des revendications précédentes, **caractérisé en ce que** sur au moins un organe de travail (34, 35, 36, 37, 38) relié au véhicule de manière motrice est disposé au moins un capteur (39) qui sert à la détection d'oscillations.

4. Véhicule agricole (1) selon une des revendications 2 ou 3, **caractérisé en ce que** le au moins un capteur (13, 26, 39) est conformé pour détecter des grandeurs de déplacement, une vitesse ou une accélération.

5. Véhicule agricole (1) selon une des revendications 2-4, **caractérisé en ce que** le véhicule (1) inclut un dispositif de commande (9, 33) qui est agencé pour analyser les signaux fournis par le au moins un capteur (13, 26, 39).

6. Véhicule agricole (1) selon la revendication 5, **caractérisé en ce que** le dispositif de commande (9, 33) inclut au moins un filtre de fréquences (43a, 43b).

7. Véhicule agricole (1) selon les revendications 5 ou 6, **caractérisé en ce que** le dispositif de commande (9, 33) inclut un amplificateur (44).

8. Véhicule agricole (1) selon une des revendications 5 à 7, **caractérisé en ce que** le dispositif de commande (9, 33) est agencé pour établir une plage de fréquences oscillatoires qui est couplée dans le au moins un élément de carrosserie (7, 29) par le au moins un actionneur (15, 40).

9. Véhicule agricole (1) selon une des revendications 5-8, **caractérisé en ce que** l'équipement de commande (9, 33) est agencé pour sélectionner des réglages de base dépendants de l'état de fonctionnement pour commander ou réguler le au moins un actionneur (15, 40).

10. Véhicule agricole (1) selon une des revendications précédentes, **caractérisé en ce que** le au moins un élément de carrosserie (7, 29) fait partie de la cabine de conduite (4, 22) du véhicule agricole.

11. Véhicule agricole (1) selon une des revendications précédentes, **caractérisé en ce que** le au moins un actionneur (15, 40) couple des oscillations dans un élément plat (7, 29) de la cabine de conduite (4, 22).

12. Véhicule agricole (1) selon une des revendications précédentes, **caractérisé en ce que** le au moins un actionneur (15, 40) est disposé sur le plancher (5, 27) de la cabine de conduite (4, 22).

13. Procédé de surveillance d'un véhicule agricole (1), en particulier tracteur (2) ou machine de récolte automotrice (20), incluant une cabine de conduite (4, 22) disposée sur un bâti de véhicule (3, 21) ainsi qu'un organe d'entraînement (10, 24), **caractérisé en ce que** le véhicule agricole (1) comporte au moins un actionneur (15, 40) par lequel des oscillations sont générées et couplées dans au moins un élément de carrosserie (7, 29), l'actionneur (15, 40) étant commandé ou régulé en fonction d'au moins une valeur d'accélération, laquelle est détectée au moins au niveau de l'organe d'entraînement (10, 24).
